# EUROPÄISCHE PATENTSCHRIFT

(11) **EP 1 450 635 B1**
(45) Veröffentlichungstag und Bekanntmachung des Hinweises auf die Patenterteilung: **16.01.2008**
(21) Anmeldenummer: 02792837.3
(22) Anmeldetag: 29.11.2002
(51) Int. Cl.: A41D 13/06, B29C 44/12

(54) **KNIESCHONER**
KNEE PAD
PROTEGE-GENOU

(30) Priorität: 10.12.2001 DE 10160416
(43) Veröffentlichungstag der Anmeldung: 01.09.2004
(73) Patentinhaber: KWM ENTWICKLUNGS-, VERTRIEBS- UND SERVICE GMBH, 89188 Merklingen (DE)
(72) Erfinder: SÜSS, Walter, 89188 Merklingen (DE)
(74) Vertreter: Weiss, Peter
(86) Internationale Anmeldenummer: PCT/EP2002/013509
(87) Internationale Veröffentlichungsnummer: WO 2003/053185

(56) Entgegenhaltungen:
- EP-A- 0 986 967
- DE-C- 4 326 433
- DE-U1- 20 002 829
- DE-U1- 29 903 761
- DE-U1- 29 919 382
- FR-A- 2 084 293
- GB-A- 999 515
- US-A- 4 723 322
- US-A- 5 423 087
- VANCE JR. JIM: 'Insert Molding' INTERNET ARTICLE, [Online] April 1996, Gefunden im Internet: <URL:http://www.devicelink.com/mddi/archive /96/04/010.html> [gefunden am 2005-08-04]

## Beschreibung

Die Erfindung betrifft einen Knieschoner, als Schutz für ein menschliches Knie aus einem formstabilen Trägerelement, dem ein weicheres Formteil zugeordnet ist, wobei das Trägerelement eine Umrandung aufweist, und innerhalb der Umrandung das Formteil eingelegt ist.

Herkömmlich werden mittels Schäumformen Knieschoner hergestellt, indem lediglich ein Kunststoff, vorzugsweise ein Polyuretanschaum in die Schäumform eingespritzt und nach dem Erhärten der Knieschoner fertiggestellt wird.

Die DE 43 26 433 C1 offenbart einen Knieschutz für knieende Personen, bestehend aus einer Halbschale, in welcher aussen in eine Vertiefung ein Weichpolster eingesetzt, insbesondere eingeklebt ist und innerhalb eine innere aus Polypropylen hergestellte Schale mit einem zusätzlichen Weichpolster ausgekleidet wird.

Die US 5,423,087 zeigt Körperprotektoren, die aus einer Vielzahl von Elementen hergestellt sind. Dabei enthalten die Körperprotektoren ebenfalls Luftpolster und Luftkanäle. Die einzelnen Protektoren sind aus einer Vielzahl unterschiedlicher, aus unterschiedlich gebildeten Materialien zusammengesetzt bzw. diese sind miteinander zum Protektor verklebt.

Die DE 200 02 829 U1 beschreibt einen Knieschoner aus einer thermoplastischen Aussenschale, welche in einem thermoplastischen Spritzguss hergestellt wird. Die Aussenschale enthält Durchbrüche. Nach dem thermoplastischen Spritzgiessen der Aussenschale, wird ihnen Polyurethanschaum aufgegeben, welcher durch die Durchbrüche der thermoplastischen Aussenschale heraustritt.

Die DE 299 03 761 U1 offenbart einen Knieschoner aus einer thermoplastischen Aussenschale, und einem formgeschäumten Innenteil aus einem weichen, flexiblen Schaumstoff, der in die Aussenschale eingeschäumt ist.

Die US 4,723,322 offenbart eine Fussauflage, welche aus mehreren einzelnen Schichten von unterschiedlichen Schaumstoffen gebildet ist, wobei mittig in der Fussauflage eine Mulde zur Aufnahme des Knies vorgesehen ist.

Aus der EP 0 986 967 A1 ist ein Knieschützer beschrieben, welcher ein verstellbares Kraftübertragungselement in einem Schutzabschnitt aufweist, welches zwischen zwei Halteabschnitte vorgesehen ist. Auch hier wird zunächst in einem separaten eigenständigen Spritzgussverfahren aus Kunststoff der Kern hergestellt. In einem zweiten Verfahren wird dann der Kern bearbeitet.

Einen gattungsgemässen Knieschützer offenbart die DE 299 19 382 U1, bei welchem in einem Grundkörper eine Mulde vorgesehen ist, in welche ein auswechselbares Kissen einlegbar ist.

Der vorliegenden Erfindung liegt die Aufgabe zugrunde, einen Knieschoner anzubieten, welcher insbesondere für eine Dauerbelastung wesentlich verträglicher ist. Er soll haltbar und knieschonender sein.

Zur Lösung dieser Aufgabe führt das Merkmal des kennzeichnenden Teils von Anspruch 1.

Es hat sich als vorteilhaft erwiesen, dass beispielsweise bei Wassereintritt dieses über die Rinne abfliessen kann, ohne dass das in das Formteil eingelegte Knie nass wird oder permanent sich im Nassen befindet.

Zur Herstellung des Knieschoners wird eine Schäumform ein Formteil eingelegt und dieses, wie herkömmlich, als Trägerelement zum Knieschoner umschäumt. Dabei ist das Formteil aus einem wesentlich weicheren und elastischerem Material, als das umgebende Trägerelement hergestellt ist.

Das Formteil kann mit Gel oder einem weichen PUR-Polyurethan gefüllt oder als Gel-PUR-Kissen, als Gel-PUR-Einlage weich verformbar hergestellt sein.

Damit eine unwiederlösbare feste Verbindung zwischen Formteil und Trägerelement hergestellt werden kann, sind an einer Unterseite eine Mehrzahl von Erhöhungen, vorzugsweise zylinderartig vorgesehen, die bei deren Umschäumen eine feste und unwiederlösbare Verbindung zum Trägerelement herstellen. Vorzugsweise sind Formteil und Trägerelement aus ein und derselben Grundsubstanz auf gleicher chemischer Basis hergestellt, so dass eine unwiederlösbare Verbindung auf diese Weise hergestellt werden kann.

Das Formteil kann einer äusseren Form des Knies angepasst oder angeglichen sein, so dass eine ergonomische Form des Knieschoners, insbesondere des dort integrierten Formteiles hergestellt wird.

Es können beispielsweise im Bereich einer Grundplatte eine oder mehrere Taschen im Trägerelement vorgesehen sein, die beispielsweise mit Gel oder einer ähnlichen Substanz gefüllt werden können, um eine ergonomisch weiche Form, insbesondere eine weiche Auflagefläche für das Knie zu erzeugen.

Dabei können in einer Schäumform entsprechende Taschen vorgesehen sein, die umschäumt werden und nach dem Umschäumen mit Gel befüllt werden. Anschliessend können entsprechende verbleibende Öffnungen durch weiteres Umschäumen geschlossen werden.

Damit ein Ablösen des Trägerelementes, insbesondere des Knieschoners von einem bliebigen Untergrund erleichtert ist, können an dessen unteren Aussenseite eine Mehrzahl von Entlüftungsausnehmungen vorgesehen sein.

Auch soll daran gedacht sein, beispielsweise eine Dehnungsmulde im Bereich des Hauptbelastungspunktes vorzusehen, so dass zum einen eine bessere Isolierung und zum anderen eine federnde Dämpfung erzielt werden kann. Die Entlüftungsausnehmungen werden ins Freie geführt bzw. ragen vom Untergrund in eine Umrandung zumindest teilweise ein, was Festsaugen des Knieschoners am Untergrund verhindert.

Dabei kann von Vorteil sein, dass durch das weich ausgebildete Formteil, sich dieses an das Knie anpasst und eine Kniescheibe insbesondere bei Langzeiteinsatz schont.

Ferner wird über das sehr formstabile Trägerelement gewährleistet, dass Unebenheiten auf einem beliebigen Untergrund überbrückt werden können und hierdurch ein entsprechender Halt gewährleistet wird.

Zudem wird eine optimale Druckverteilung, insbesondere bei vollwertigem Einsatz zur Schonung der Kniescheibe und des Knies gewährleistet. Auch wird ein Dämpfungsverhalten durch das weiche, vorzugsweise aus Gel hergestellte Formteil optimiert. Es hat sich ferner als vorteilhaft erwiesen, dass insbesondere beim Arbeiten mit einem erfindungsgemässen Knieschoner keine Bremswirkung entsteht, d.h., das Formteil führt alle Bewegungen ohne Torsionsverluste mit. Insbesondere durch die Erhöhungen des Formteiles werden auch Dämpfungsverhalten weiter verbessert.

Zudem hat sich als vorteilhaft erwiesen, das Gel, insbesondere für das weiche Formteil, glasklar, eingefärbt oder transparent zu gestalten, so dass der Knieschoner beispielsweise zweifarbig hergestellt werden kann.

Weitere Vorteile und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte perspektivische Draufsicht eines Knieschoners;
Figur 2 eine schematisch dargestellte perspektivische Darstellung eines Formteiles als Bestandteil des Knieschoners gemäss Figur 1;
Figur 3 eine perspektivische schematische Darstellung eines Trägerteiles als Bestandteil des Knieschoners gemäss Figur 1;
Figur 4 eine perspektivisch dargestellte Unteransicht des Knieschoners gemäss Figur 1;
Figur 5 eine perspektivisch dargestellte Unteransicht auf das Formteil als Bestandteil des Knieschoners gemäss Figur 2.

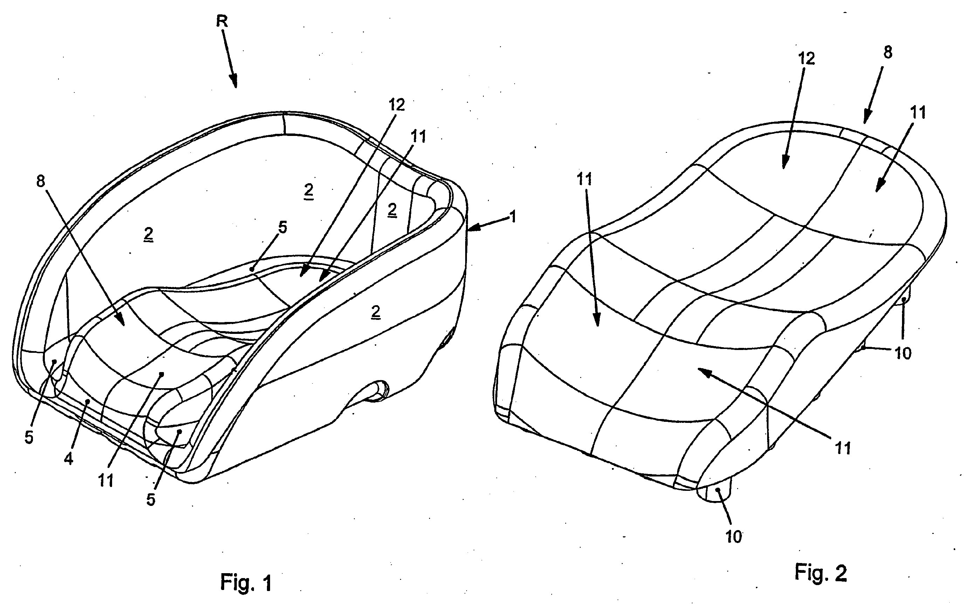

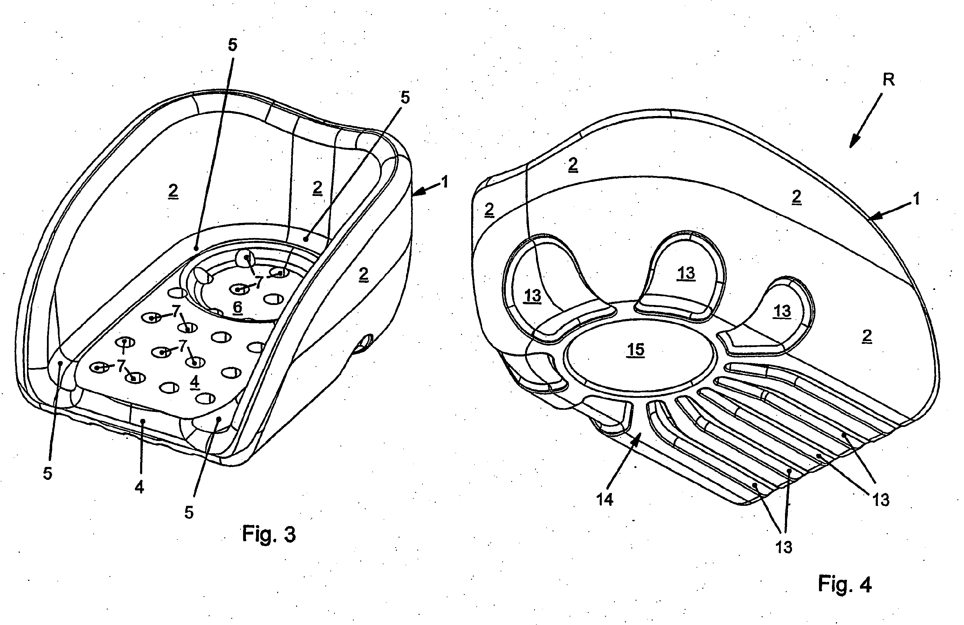

Gemäss Figur 1 weist ein Knieschoner R ein Trägerelemente 1 auf, wie es beisielsweise in Figur 3 dargestellt ist. Das Trägerelement 1 ist mit einer Umrandung 2 versehen, die U-artig ausgebildet und in einem Öffnungsbereich 3 bogenartig zu einer Grundplatte 4 des Trägerelementes 1 geführt ist.

Im Bereich der Umrandung 2 neben der Grundplatte 4 ist in dem Trägerelement 1 eine U-artig umlaufende Rinne 5 eingelassen, die endseits ins Freie mündet. Die Rinne 5 dient als Ablauf von Flüssigkeit, beispielsweise Wasser od. dgl..

Ferner ist in der Grundplatte 4 des Trägerelementes 1 eine Vertiefung 6 eingelassen, die vorzugsweise rund ausgebildet ist.

Ferner sind in der Grundplatte 4 eine Mehrzahl von Ausnehmungen 7 gebildet.

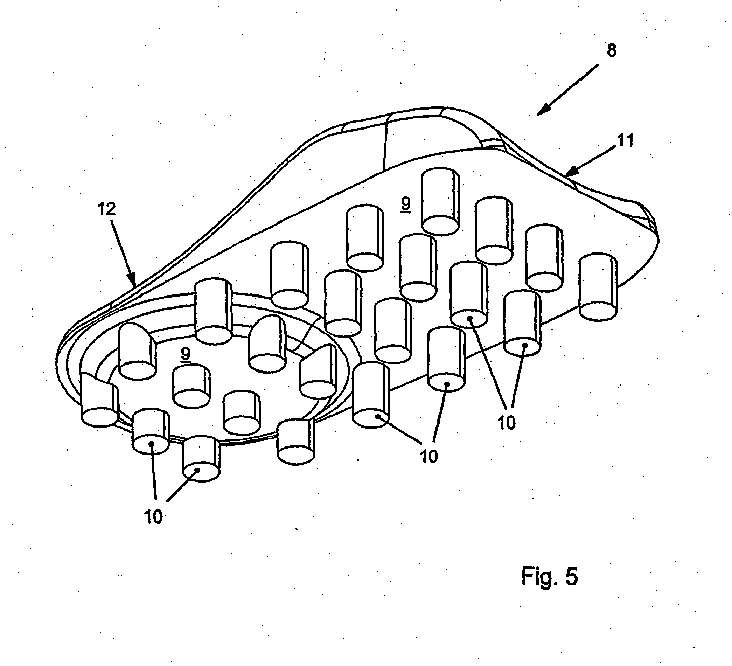

In das Trägerelement 1, insbesondere auf die Grundplatte 4 wird ein Formteil 8, wie es insbesondere aus den Figuren 1, 2 und 5 hervorgeht, aufgesetzt bzw. fest mit dem Trägerelement 1 verbunden. Das Formteil 8 ist vorzugsweise als gelartige Einlage, als gelartiges Kissen hergestellt und an einer Unterseite 9 (siehe Figur 5) mit einer Mehrzahl von zylinderartigen Erhöhungen 10 versehen. Zum Herstellen des Knieschoners R hat sich als besonders vorteilhaft erwiesen, ein derartiges, wie es insbesondere in den Figuren 2 und 5 gezeigt ist, dargestelltes Formteil 8 in eine hier nicht dargestellte Schäumform einzulegen und zumindest die Unterseite 9 mit ihren Erhöhungen 10 zu umschäumen, um die Grundplatte 4 bzw. das Trägerelement 1 zu bilden.

Dabei ist eine äussere Auflagefläche 11 ergonomisch der Form eines Knies angepasst, wobei in einem vorderen Bereich eine Mulde 12 eingeformt ist. Im Bereich der Mulde 12 ist, wie es insbesondere aus den Figuren 2 und 5 hervorgeht, die Unterseite 9 der äusseren Mulde 12 angepasst und nach unten verstärkt ausgebildet.

Diese Verstärkung bzw. Vertiefung findet sich entsprechend in der Grundplatte 4 des Trägerelementes 1 (siehe Figur 3) wieder.

Beim Herstellen des Trägerelementes 1 durch Umspritzen des Formteiles 8 passt sich die Grundplatte 4 der Form der Unterseite 9 des Formteiles 8 an.

Ferner können eine Mehrzahl von schlitzartigen Entlüftungsausnehmungen 13 in eine untere Aussenseite 14 in das Trägerelement 1 eingelassen bzw. eingeformt sein, wobei die länglichen Schlitze nach aussen geführt sind.

Die entsprechenden Entlüftungsausnehmungen 13, die in einem vorderen Bereich des Trägerelementes 1 angeordnet sind, übergreifen die Aussenseite 14 und ragen in den Bereich der Umrandung 2 hinein. Auf diese Weise wird ein Loslösen des Knieschoners R von einem beliebigen Untergrund gewährleistet. Dieser kann sich nicht festsaugen.

Ferner kann im Breich der Mulde 12 des Formteiles 8, insbesondere in der Aussenseite 14 des Trägerelementes 1 eine Dehnungsmulde 15 gebildet sein, die einerseits eine Isolierung, andererseits zur Dämpfung und Entlastung der Kneischeibe bei Belastung fördert.

### Positionszahlenliste

| | | | | | |
|---|---|---|---|---|---|
| 1 | Trägerelement | 34 | | 67 | |
| 2 | Umrandung | 35 | | 68 | |
| 3 | Öffnungsbereich | 36 | | 69 | |
| 4 | Grundplatte | 37 | | 70 | |
| 5 | Rinne | 38 | | 71 | |
| 6 | Vertiefung | 39 | | 72 | |
| 7 | Ausnehmung | 40 | | 73 | |
| 8 | Formteil | 41 | | 74 | |
| 9 | Unterseite | 42 | | 75 | |
| 10 | Erhöhungen | 43 | | 76 | |
| 11 | Auflagefläche | 44 | | 77 | |
| 12 | Mulde | 45 | | 78 | |
| 13 | Entlüfungsausnehmung | 46 | | 79 | |
| 14 | Aussenseite | 47 | | | |
| 15 | Dehnungsmulde | 48 | | R | Knieschoner |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Knieschoner als Schutz für ein menschliches Knie aus einem formstabilen Trägerelement (1), dem zumindest ein weicheres Formteil (8) zugeordnet ist, wobei das Trägerelement (1) eine Umrandung (2) aufweist und innerhalb der Umrandung das Formteil (8) eingelegt ist, **dadurch gekennzeichnet dass** zwischen dem Formteil (8) und der Umrandung (2) eine zumindest teilweise umlaufende Rinne (5) gebildet ist.

2. Knieschoner nach Anspruch 1, **dadurch gekennzeichnet, dass** in dem Trägerelement (1) das zumindest eine weiche Formteil (8) eingeschlossen oder integriert ist, wobei das Formteil (8) als elastisch verformbares Element aus Gel oder weichem PUR hergestellt ist.

3. Knieschoner nach Anspruche 1 oder 2, **dadurch gekennzeichnet, dass** eine Unterseite (9) des Formteiles (8) eine Mehrzahl von Erhöhungen (10) und/oder Ausnehmungen aufweist.

4. Knieschoner nach Anspruch 3, **dadurch** gekennzeichent, dass eine Mehrzahl von Erhöhungen (10) zylinderartig von der Unterseite (9) des Formteiles (8) abragen.

5. Knieschoner nach wenigstens einem der Ansprüche 1 bis 4, **dadurch gekennzeichnet, dass** eine äussere Auflagefläche (11) des Formteiles (8) in etwa der Form eines Knies entspricht.

6. Knieschoner nach wenigstens einem der Ansprüche 1 bis 5, **dadurch gekennzeichnet, dass** an einer Aussenseite (14) des Trägerelementes (1) eine Mehrzahl von Entlüftungsausnehmungen (13) und zumindest eine Dehnungsmulde (15) vorgesehen vorgesehen sind.

7. Knieschoner nach Anspruch 5 oder 6, **dadurch gekennzeichnet, dass** das Formteil (8), insbesondere die Auflagefläche (11) im Bereich der Kniescheibe verstärkt, insbesondere dicker ausgebildet ist

8. Knieschoner nach wenigstens einem der Ansprüche 1 bis 7, **dadurch gekennzeichnet, dass** das Formteil (8) durchsichtig, eingefärbt oder transparent ist.

9. Knieschoner nach wenigstens einem der Ansprüche 1 bis 8, **dadurch gekennzeichnet, dass** das Formteil (8) fest mit dem Trägerelement (1) verbunden ist.

## Claims

1. Knee protector as protection for a human knee, comprising a dimensionally stable carrier element (1), with which at least one softer moulded part (8) is associated, wherein the carrier element (1) has an edging (2) and the moulded part (8) is inserted inside the edging, **characterized in that** a channel (5) is formed and extends at least partially round between the moulded part (8) and the edging (2).

2. Knee protector according to claim 1, **characterized in that** the at least one soft moulded part (8) is enclosed or integrated in the carrier element (1), wherein the moulded part (8) is manufactured as an elastically deformable element from gel or soft PUR.

3. Knee protector according to claim 1 or 2, **characterized in that** an underside (9) of the moulded part (8) has a plurality of raised portions (10) and/or recesses.

4. Knee protector according to claim 3, **characterized in that** a plurality of raised portions (10) project in a cylinder-like manner from the underside (9) of the moulded part (8).

5. Knee protector according to at least one of claims 1 to 4, **characterized in that** an outer support surface (11) of the moulded part (8) corresponds approximately to the shape of a knee.

6. Knee protector according to at least one of claims 1 to 5, **characterized in that** at an outer side (14) of the carrier element (1) a plurality of air vent recesses (13) and at least one expansion depression (15) are provided.

7. Knee protector according to claim 5 or 6, **characterized in that** the moulded part (8), in particular the support "surface (11) is of a reinforced, in particular thicker construction in the region of the kneecap.

8. Knee protector according to at least one of claims 1 to 7, **characterized in that** the moulded part (8) is translucent, pigmented or transparent.

9. Knee protector according to at least one of claims 1 to 8, **characterized in that** the moulded part (8) is connected in a fixed manner to the carrier element (1).

## Revendications

1. Protège-genou comme protection d'un genou humain, composé d'un élément support de forme stable (1) auquel est associée une pièce moulée plus souple (8), l'élément support (1) présentant un bord (2) et dans le bord étant placée la pièce moulée (8), **caractérisé par le fait qu'**entre la pièce moulée (8) et le bord (2) est formée une rainure au moins partiellement continue (5).

2. Protège-genou selon la revendication 1, **caractérisé par le fait que** dans l'élément support (1) est enclose ou intégrée l'au moins une pièce moulée souple (8), la pièce moulée (8) étant réalisée sous forme d'élément déformable élastiquement en gel ou PUR souple.

3. Protège-genou selon la revendication 1 ou 2, **caractérisé par le fait qu'**une face inférieure (9) de la pièce moulée (8) présente une pluralité de bosses (10) et/ou d'évidements.

4. Protège-genou selon la revendication 3, **caractérisé par le fait qu'**une pluralité de bosses (10) ressortent de forme cylindrique de la face inférieure (9) de la pièce moulée (8).

5. Protège-genou selon au moins l'une des revendications 1 à 4, **caractérisé par le fait qu'**une face d'appui extérieure (11) de la pièce moulée (8) correspond environ à la forme d'un genou.

6. Protège-genou selon au moins l'une des revendications 1 à 5, **caractérisé par le fait que** sur une face extérieure (14) de l'élément support (1) sont prévus une pluralité d'évidements d'aération (13) et au moins une cuvette d'extension (15).

7. Protège-genou selon la revendication 5 ou 6, **caractérisé par le fait que** la pièce moulée (8), en particulier la surface d'appui (11), est renforcée, en particulier réalisée plus épaisse, à l'endroit de la rotule.

8. Protège-genou selon au moins l'une des revendications 1 à 7, **caractérisé par le fait que** la pièce moulée (8) est translucide, colorée ou transparente.

9. Protège-genou selon au moins l'une des revendications 1 à 8, **caractérisé par le fait que** la pièce moulée (8) est rendue solidaire de l'élément support (1).
